# EUROPEAN PATENT SPECIFICATION

(11) **EP 4 030 964 B1**
(45) Date of publication and mention of the grant of the patent: **15.01.2025**
(21) Application number: 20775948.1
(22) Date of filing: 16.09.2020
(51) Int. Cl.: A47B 31/02, A47J 41/00, B64D 11/00, A47G 23/06, A47G 23/03

(54) **A TEMPRATURE REGULATED TRAY**
TEMPERIERTE SCHALE
PLATEAU À TEMPÉRATURE RÉGULÉE

(30) Priority: 16.09.2019 GB 201913358; 28.10.2019 GB 201915579; 03.02.2020 GB 202001457
(43) Date of publication of application: 27.07.2022
(73) Proprietor: Phaslo Global Innovation Pty Ltd, Birtinya, Queensland 4575 (AU)
(72) Inventor: LATCHAM, Damien, 65201 Wiesbaden (DE)
(74) Representative: HGF
(86) International application number: PCT/IB2020/058609
(87) International publication number: WO 2021/053532

(56) References cited:
- EP-A2- 2 386 811
- EP-A2- 3 441 699
- WO-A1-2012/131471
- WO-A1-2013/024448
- WO-A1-2017/072508

## Description

This invention relates generally to temperature regulation and in particular to a tray for regulating the temperature of an environment. More specifically, although not exclusively, this invention relates to a tray for regulating the temperature of or within a trolley, for example a galley trolley of an aircraft.

Trolleys are often used to convey goods. Some goods which are to be conveyed require that the temperature is to be regulated to ensure that the goods do not perish during transport and/or that the goods are deliverable from the trolley at or near optimum conditions, for example for ingestion. Medicines, foodstuffs and beverages are examples of such goods.

Aircraft (e.g. commercial aircraft) are often required to carry one or more service trolleys or galley trolleys (hereinafter "galley trolleys") on any given flight. These galley trolleys are supplied by an air carrier or airline catering provider and used by flight attendants onboard the aircraft for the transport of beverages, airline meals and other items during a flight.

Often, one or more of these galley trolleys are refrigerated, for example, so as to prolong the life of perishable food and drink(s) and/or to ensure that it is provided in an optimum (or acceptably close to optimum) state when carried onboard an aircraft.

Currently, a galley trolley may be refrigerated through the use of blocks of solid carbon dioxide ("dry ice"). A galley trolley may have a compartment, for example located at the top of the galley trolley, which is loaded with blocks of dry ice prior to a flight. Typically, a galley trolley requires significant quantities of dry ice (which may be 1.8-2.4kg of dry ice per trolley in the UK and perhaps over 3.5kg in hotter or hot climates, *e.g.* southern Europe, Persian Gulf) to provide a required or desired refrigerating effect. As the galley trolleys have to be packed with comestibles, delivered to the airport, delivered to the airplane, loaded onto the airplane and provide cooling for the length of the flight, sufficient dry ice has to be used to ensure that the comestibles remain at the desired temperature (or at least below a threshold temperature). This requires that extra dry ice (in the sense of more than would be optimally required) is added to accommodate potential delays in delivery, loading, take-off, flight and so on.

Further, within an aircraft galley trolleys are stowed during take-off, landing and when not in use for the dispensation of goods. Clearly, the size and shape of the stowing points (ports or apertures) for galley trolleys are fixed when the aircraft is built or the aircraft is fitted out for service. These stowing points are typically of a standard size. Therefore, if greater capacity for dry ice is required, the capacity of the compartment for comestibles must be sacrificed.

Clearly a supplier of food to an airline, *e.g.* Gate Gourmet, LSG Sky Chefs (both RTM), will likely supply plural comestible-filled galley trolleys to an airport. Typically, a supplier may supply food to several airlines operating from a single airport. At a busy airport this may amount to hundreds or thousands of galley trolleys per day. In order to provide such a number of refrigerated galley trolleys it is necessary to use a significant amount of dry ice. This has its own logistical issues as dry ice typically needs to be supplied from an off-field site to the galley trolley supplier and needs to be held at an appropriate temperature to ensure that it can be used. The handling of dry ice may also necessitate the use of specialist equipment. It is known that dry ice sublimes at atmospheric pressure and room temperatures. This is clearly wasteful and may be sub-optimal when the galley trolleys are located in a confined atmosphere (such as a galley on an aircraft).

WO2017072508A1 describes a thermally insulated container for an in-flight service cart and an in-flight service cart for use on an aircraft for maintaining a payload such as foodstuffs and the like within a selected temperature range. The in-flight service cart includes: a housing having a storage volume; and at least one thermally insulated container removably mounted within the housing, said container having an outer casing, a thermally conductive inner casing, thermal insulation located between the outer casing and the inner casing, said thermal insulation including at least one vacuum insulation panel, a payload volume for storing foodstuffs, an opening providing access to the payload volume, a closure member for closing the opening, at least one thermal energy storage unit located within the inner casing, said thermal energy storage unit(s) including a phase change material that is arranged to change phase at a temperature greater than or equal to -10°C; wherein the inner casing and closure member define the payload volume for storing the foodstuffs, and the thermal energy storage unit(s) is positioned in thermal contact with the inner casing, the arrangement being such that the inner casing provides a thermally conductive pathway for conducting heat entering the container to the thermal energy storage unit.

EP2386811A2 describes a cold tray for a container. The cold tray may include a cold tray housing mountable within the container interior. A refrigerant may be mounted to the cold tray housing. An air flow source may be fluidly connectable to the cold tray housing and may draw air from the container interior into the cold tray housing such that the air passes over the refrigerant and is discharged back into the container interior.

Therefore, it would be desirable to provide a means for reliably and/or cheaply refrigerating a galley trolley for an aircraft.

It is therefore a non-exclusive object of the invention to provide a temperature regulation (e.g. refrigeration) system that overcomes, or at least partially mitigates, one or more of the aforementioned issues of the prior art.

Accordingly, a first aspect of the invention provides a tray in accordance with claim 1.

The body, or a portion thereof, may be a rigid body.

Such an arrangement provides a compact, re-useable means for refrigerating a galley trolley. The phase change material can be chosen to be resistant to thermal cycling, allowing for prolonged use. Further, the use of a phase change material removes the need to load and unload a dry ice compartment.

The tray may be sized and shaped to be located within a compartment of a trolley. For example, the tray may be sized and shaped to be located within an upper compartment of a galley trolley, e.g. in the compartment typically used for the storage of dry ice of a conventional galley trolley. Advantageously, locating the tray in a compartment of a trolley, e.g. the dry ice compartment, avoids the need to take up space in the main body of the trolley, which is for the storage of comestibles e.g. foodstuffs, drinks and so on.

The tray may have a mass of less than 2kg, for example less than 1.9kg, 1.8kg or 1.7kg. The tray may have a mass of 1.6kg or less. It will be appreciated that the use of a tray which can provide the required cooling but which is lighter than the dry ice otherwise used is advantageous.

The sealed volume may be a fluidly sealed and/or hermetically sealed volume. Additionally or alternatively, the body may be openable to allow access to the sealed volume.

By providing a sealed volume, the tray may be passed through a sterilisation process (i.e. may undergo sterilisation) without affecting the phase change material and therefore, the associated thermal properties of the overall apparatus.

The PCM may have a phase change temperature or melting temperature between -100 and 100 degrees Celsius, for example between -75 and 75 degrees Celsius.

In embodiments, the phase change material may have a phase change temperature or melting temperature of less than 0 degrees Celsius. The PCM may have a phase change temperature or melting temperature of between 0 and -80 degrees Celsius, for example between 0 and -70 degrees Celsius, between 0 and -60 degrees Celsius, between 0 and - 50 degrees Celsius, 0 and -40 degrees Celsius, between -5 and -75 degrees Celsius, between -10 and -70 degrees Celsius.

The tray may be a temperature regulating tray, for example a cooling or refrigerating tray. The tray or temperature regulating tray may be configured to provide a cooling or refrigerating effect to a trolley.

Alternatively, the PCM may have a phase change temperature or melting temperature greater than 0 degrees Celsius. The PCM may have a phase change temperature or melting temperature between 0 and 100 degrees Celsius, for example between 10 and 90 degrees Celsius, between 20 and 80 degrees Celsius. Accordingly, the tray may be a temperature regulating tray, for example a heating tray. The tray or temperature regulating tray may be configured to provide a heating effect to a trolley.

In embodiments, the PCM may have a phase change temperature or melting temperature between 20 and -60 degrees, for example between 15 and -55 degrees Celsius, or between 10 and -50 degrees Celsius.

The PCM may be a solid-liquid phase change material. The PCM may be configured to transition between solid and liquid states (and *vice versa*) at the phase change temperature.

The use of a solid-liquid phase change material removes at least some of the above-identified issues associated with dry ice, for example the transport, storage, handling and/or the sublimation of dry ice.

The tray may be configured for controlling a temperature within an environment, e.g. a food storage compartment of a trolley, for example a galley trolley of an aircraft. Typically, trays used for cooling will use a PCM with a phase change temperature of less than 0°C to ensure that the goods contained within the trolley remain below a threshold temperature.

The PCM may comprise a eutectic solution. Additionally or alternatively, the PCM may be or comprise an organic PCM, e.g. a bio-based, paraffin, eutectic or carbohydrate derived PCM. The PCM may be or comprise an inorganic PCM, e.g. a compound, aqueous salt solution, salt and/or a salt hydrate based PCM. The PCM may be or comprise an inorganic eutectic PCM.

The PCM may comprise one or more of the PCM materials disclosed in Oro et al (Applied Energy, 99 (2012) 513-533).

The PCM may be encapsulated, *e.g.* microencapsulated, in spherical or tubular capsules. The sealed volume may comprise a plurality of capsules, *e.g.* spherical or tubular capsules, one or more having a PCM encapsulated within.

The sealed volume may comprise a shape-stable means or body. The shape-stable means or body may comprise or be a porous material. The shape-stable means or body or porous material may comprise or be a foam material, for example a polymeric foam.

The sealed volume may comprise a porous material, e.g. a synthetic porous material. The sealed volume may comprise a foam material, preferably an insulative foam material, e.g. a thermally insulative foam material. Additionally or alternatively, the sealed volume may comprise an aerogel.

The shape-stable means or body, porous material or insulative foam material may be an open-celled foam material. Alternatively, the shape-stable means, porous material or insulative foam may be a closed-celled foam. In embodiments, the shape-stable means, porous material or insulative foam material comprises both an open-celled foam and a closed-celled foam, e.g. arranged in separate regions or layers.

The shape-stable means, porous material or insulative foam material may comprise a phenolic foam, phenol-aldehyde resol resin, phenol derivatives, polyurethanes, polystyrenes and mixtures and combinations thereof.

The PCM may be at least partially located within, integrated, received within or absorbed into pores or spaces of the shape-stable means, porous material or insulative foam material.

The sealed volume may comprise a layer of insulative foam or aerogel. The layer of insulative foam or aerogel may be located between or interstitially of a wall or periphery of the sealed volume and the PCM. The sealed volume may comprise an insulated side and a non-insulated side.

The sealed volume may have a volume V. The volume of PCM within the sealed volume may have a volume V_{PCM}. A major or minor proportion of the volume V sealed volume may be taken up by the PCM, for example a major portion, i.e. V_{PCM}<0.5V> V_{PCM}. In other embodiments V_{PCM}=0.5V.

In embodiments the shape-stable means or body, porous material or insulative foam material may have a gross volume V_{P} (the gross volume being a volume determined by its outer dimensions). In embodiments V_{P}<V_{PCM}>V_{P}, in other embodiments V_{P}=V_{PCM}. In embodiments the shape-stable means, porous material or insulative foam material may have a pore volume V_{OP}. In embodiments V_{OP}<V_{PCM}>V_{OP}, in other embodiments V_{OP}=V_{PCM}.

The volume V_{P} may comprise a major proportion of the volume V. For example 0.5V≤V_{P}≤0.9V. In an embodiment 0.6V≤V_{P}≤0.8V. In another embodiment 0.65V≤V_{P}≤0.75V.

In embodiments, the shape-stable means, porous material, insulative foam material or aerogel may comprise a thermally conductive material, member or element, e.g. distributed or dispersed therethrough. The thermally conductive material, member or element may be or may comprise a metal. The thermally conductive material, member or element or the shape-stable means, porous material or insulative foam material or aerogel may comprise carbon nanotubes (CNTs), metals, graphite and/or graphene, e.g. a graphene powder or graphene ink. The thermally conductive material may be a relatively thermally conductive material.

In embodiments, the PCM may comprise a thermally conductive material, member or element, e.g. distributed or dispersed therethrough.

By providing the shape-stable means, porous material, insulative foam material or aerogel with a relatively thermally conductive material, member or element, the time required to bring the phase change material to a or the required temperature may be reduced, e.g. the freezing time may be reduced.

The shape-stable means, porous material, insulative foam material or aerogel may have an open cell porosity. The porosity of the shape-stable means, porous material, insulative foam material or aerogel may be between 40-95%, for example between 50-95%, between 60-95%. The porosity of the shape-stable means, porous material, insulative foam material or aerogel may be greater than 70%, for example greater than 80%, greater than 85% or greater than 90%.

In this context, a relatively thermally conductive material is one which has a thermal conductivity higher than that of the shape-stable means, porous material, insulative foam material or aerogel.

In embodiments, the tray, body or thermally conductive material, member or element may comprise a direct contact heat exchanger. The direct contact heat exchanger may comprise a metallic pin or rod, e.g. extending through the body and into the sealed volume.

The shape-stable means, porous material or insulative foam material may comprise a combination of phenolic resin and CNTs, metals, graphite, graphene (*e.g.* powder and/or graphene ink). The shape-stable means, porous material or insulative foam material or aerogel may comprise CNTs, metals, graphite and/or graphene distributed or dispersed therethrough.

The shape-stable means, porous material or insulative foam material or aerogel may comprise up to 20% CNTs and/or graphene by weight, for example up to 10% CNTs and/or graphene by weight or between 1-2% CNTs and/or graphene by weight. Alternatively, the shape-stable means, porous material or insulative foam material or aerogel may comprise up to 20% CNTs and/or graphene by volume, for example up to 10% CNTs and/or graphene by volume or between 1-2% CNTs and/or graphene by volume.

The body may comprise or be formed of a polymeric material or plastics material. The body may be moulded, for example, injection moulded, compression moulded, blow moulded or rotationally moulded or a suitable combination thereof.

In an alternative embodiment the body may comprise or be formed of a metal material, for example an aluminium alloy or aluminium metal. The aluminium body may be made from a material which is 0.3 to 1.5 mm thick, for example 0.5 to 1.2mm thick. In an embodiment the material may be from 0.6 to 1.0 mm thick, say 0.8mm thick.

The body may comprise a liner material. The liner material may be an inner liner material. The liner material may be less than 1mm thick, for example less than 0.9, 0.8, 0.7, 0.6, 0.5, 0.4, 0.3, 0.2, 0.1mm thick. In an embodiment the liner may be a plastics or polymeric material. In an embodiment the liner is from 0.1 to 0.9mm thick, e.g. from 0.2 to 0.8mm thick, for example from 0.3 to 0.6mm thick.

Where the body has or includes a liner material the liner material is typically thinner than the body material.

The tray or body may comprise a coating. The coating may be an outer coating. The coating may be ice repellent. The coating may be a hydrophobic coating. Advantageously, an ice repellent coating or a hydrophobic coating facilitates the removal of the tray from the trolley. For example, where the tray is located within an upper compartment (i.e. the dry ice compartment of a conventional galley trolley), the ice repellent coating or hydrophobic coating may prevent the or any condensate (trapped within the compartment) from freezing, which may otherwise cause the tray to be secured to the walls of the trolley, thereby allowing it to be easily removed.

In embodiments, the body may comprise two parts or be a two-part body. Each of the two parts may combine or engage to describe the sealed volume. Each of the two parts may describe a portion of the sealed volume. One or each of the two-parts of the body may be injection moulded, blow moulded or rotationally moulded. Alternatively, one or each of the two parts may be press-formed.

The body may comprise one or more thermal conductivity promoters. The body or thermal conductivity promoters may comprise one or more protuberances, matrices, mesh and/or fins. The one or more thermal conductivity promoters may be configured to promote thermal transfer across or through a portion of the body.

The body may comprise a first part having a recess, cavity or depression and a second part having a recess, cavity or depression. The respective recesses, cavities or depressions may together describe the sealed volume when the first and second parts are brought together and engaged.

In embodiments, the body may comprise a first part having a recess, cavity or depression and a second part describing a lid or cover, the first and second parts together being arranged to describe the sealed volume. In embodiments, the lid or cover may be sealably secured to the first part, e.g. about the periphery of the recess, cavity or depression.

The body, polymeric material or plastics material may comprise a relatively thermally conductive material, member or element, e.g. distributed or dispersed therethrough or in a portion or region thereof. The relatively thermally conductive material, member or element may comprise a metal.

The body, polymeric material or plastics material may or relatively thermally conductive material, member or element may comprise CNTs and/or graphene, e.g. a graphene powder or graphene ink. The body, polymeric material or plastics material may or thermally conductive material, member or element may comprise graphite, CNTs and/or graphene distributed or dispersed therethrough.

The body, polymeric material or plastics material may comprise up to 20% CNTs and/or graphene by weight, for example up to 10% CNTs and/or graphene by weight or between 1-2% CNTs and/or graphene by weight. Alternatively, the body, polymeric material or plastics material may comprise up to 20% CNTs and/or graphene by volume, for example up to 10% CNTs and/or graphene by volume or between 1-2% CNTs and/or graphene by volume.

It has been found that plastics incorporating graphene or carbon nanotubes (CNTs) may be more physically robust than plastics material without such materials. This is advantageous in an environment where such plastics may be subject to physical abuse, for example when trays are being removed from or loaded into trolleys.

The tray and/or body may comprise an insulative side and a non-insulative or conductive side. In this context, insulative side is one which has a thermal conductivity less than that of the conductive side. The insulative side and conductive side may be configured to promote heat transfer between different parts, sides or regions of the tray and/or body.

The conductive side may comprise a greater amount or proportion of relatively thermally conductive material, member or element than the insulative side. The tray and/or body may comprise a greater wall thickness on the insulative side than the conductive side. The tray may be shaped or arranged such that when installed in a trolley the conductive side may face a comestible storage compartment and/or the tray may be shaped or arranged such that when installed in a trolley the insulative side may face away from a comestible storage compartment. For example, the tray may be shaped in a complementary fashion to a portion of a trolley such that it can only be installed in a trolley in a desired (*e.g.* in a single) orientation. The conductive side may be configured to face a comestible storage compartment of a galley trolley, in use. The insulative side may be configured to face away from a comestible storage compartment of a galley trolley, in use. The tray and/or body may comprise indicia to identify the insulative side and/or conductive side. The tray and/or body may comprise indicia to indicate the correct orientation of the tray, *e.g.* based on the location of the insulative side and/or conductive side.

The one or thermal conductivity promoters may be located on or towards the conductive side.

In embodiments, the body comprises a metallic structure, substructure or framework. The metallic structure, substructure or framework may have a coating, e.g. a polymeric or plastics material coating. The metallic structure, substructure of framework may be located on or towards the conductive side, *e.g.* only on the conductive side. The metallic structure, substructure or framework may comprise a mesh.

One or each of the tray, body and/or sealed volume may be substantially cubical, cuboidal or parallelepipedal.

In embodiments, the tray or body may have a height or thickness of between 20-30mm, for example between 22-28mm. The tray or body may have a height or thickness of 25mm or 27mm.

The tray or body may have a length of between 500-1500mm, for example between 600-1400mm, between 700-1300mm, 800-1200mm. The tray or body may have a length of less than 1200mm, for example less than 1100mm, less than 1000mm or less than 900mm. The tray or body may have a maximum length of 900mm.

The tray or body may have a length of between 200-700mm, for example between 300-600mm, between 400-500mm. The tray or body may have a length of less than 700mm, for example less than 600mm, less than 500mm or less than 400mm. The tray or body may have a maximum length of 500mm, 400mm or 300mm. The tray or body may have a length of 450mm, 350mm or 315mm.

The tray or body may have a width of between 200-500mm, for example between 250-450mm, between 300-400mm. The tray or body may have a maximum width of 350mm. The tray or body may have a width of 270mm.

The sealed volume may have a height or thickness of between 10-30mm, for example 25mm. The sealed volume may have a length of between 250-350mm, for example between 275-325mm, between 280-300mm. The sealed volume may have a length of 325mm or 282mm. The sealed volume may have a width of between 150-300mm, for example between 200-300mm, e.g. 220mm or 224mm.

In an embodiment the tray has a first major surface and a second major surface. In an embodiment the tray has at least one minor surface. Preferably the first and second major surfaces are opposed, for example forming the base and top of the tray. The minor surface may provide a peripheral boundary wall located between the first and second major surfaces.

At least one of the first and second major surfaces may be more thermally conductive than said at least one minor surface. For example, the said at least one of the first and second major surfaces may be thinner than said at least one minor surface.

Advantageously, by providing a more thermally conductive first part of the tray than a second part of the tray, the thermal flow can be controlled.

In an embodiment at least one of the first and second major surfaces may have a thickness Tₘ of 0.2 - 2mm. In an embodiment the thickness Tₛ of the at least one minor surface is from 0.5 to 4mm.

Where the tray has a liner, the thicknesses Tₘ and Tₛ may be the combined thickness of the body and liner materials. The liner material may be thicker in some regions than others. For example the liner may be thicker in a region adjacent said at least one minor surface than adjacent said at least one major surface, or *vice versa.*

In an embodiment the tray has a rectangular cuboidal form. The first and second major surfaces may provide the major faces of the rectangular cuboid. The said at least one minor surface preferably joins the first and second major surfaces.

Preferably, said at least one of the first and second major surfaces has a thickness of 1mm. In an embodiment said at least one minor surface has a thickness of 3mm.

One of the first and second major surfaces is more thermally conductive than the other of the first and second major surfaces. For example, one of the first and second major surfaces may be thinner than the other of the first and second major surfaces. Additionally or alternatively, one of the first and second major surfaces may be fabricated from a more thermally conductive material than the other of the first and second major surfaces.

Advantageously, by ensuring that one of the major surfaces is more highly thermally conductive the flow of heat can be controlled.

The tray may comprise an inlet configured to allow for fluid communication with the sealed volume. The inlet may extend through the body, e.g. into the sealed volume. The inlet may comprise a one-way valve. Alternatively, the inlet may comprise a cap, plug or bung. The inlet may allow or be configured to facilitate filling or emptying of the sealed volume.

Providing such an inlet allows for the phase change material located within the sealed volume to be recycled, e.g. once it has reached a certain number of thermal cycles.

The tray or body may comprise an engager or engaging means, e.g. releasable engaging or retaining means. The engager or engaging means may be for releasably securing or mounting the tray to a trolley, e.g. in use.

In an embodiment, the tray or trolley may each comprise mutually engageable engagers or engagement means or engaging means, to allow the tray to be secured to, and removed from, the trolley. For example, the tray may have a first member or part (as an engager or engagement means) and the trolley may have a second member or part for engagement with said first member or part. In an embodiment the tray is removably secured to the trolley by engaging engager or engagement means of the tray with the complementary portion of the trolley.

The engager or engagement means may be a complementary mechanical engager or engagement means or engaging means. In an embodiment, the tray may comprise a first mechanical member or part (as an engager or engagement means) and the trolley may have a second, complementary mechanical member or part for engagement with said first mechanical member or part. The complementary mechanical engager or engagement means may allow for the tray to be releasably secured to the trolley. For example, the tray may be reliably secured to the trolley (in use) or the tray may be removed from the trolley, i.e. the complementary mechanical engagement means may allow for positive disengagement of the tray with respect to the trolley.

The releasable engager or engaging means may comprise one or more latches, tabs, clips or hooks for engaging a portion of a trolley, e.g. a galley trolley of an aircraft. The releasable engager or engaging means may comprise one or more magnets or magnetic portions for engaging a portion of a trolley, e.g. a shelf of a trolley. The releasable engager or engaging means may be configured to prevent movement of the tray relative to a trolley, in use.

The releasable engager or engaging means may comprise one or more retractable latches, tabs, clips or hooks for engaging a portion of a trolley. The tray may comprise an actuator or actuation means for retracting the latches, tabs, clips or hooks so as to disengage the tray from a trolley, in use. Additionally or alternatively, the tray or body may comprise an engager or engagement means which may comprise one or more grooves, rebates or recesses for receiving one or more pins, latches, clips, tabs or hooks located on the trolley. The retainer or retaining means may secure the tray within the trolley, in use. The retainer or retaining means may be located on the first major surface and/or the second major surface of the tray, e.g. the top and base of the tray. Additionally or alternatively, the retainer or retaining means may be located on the or each minor surface of the tray, e.g. the retaining means may be provided on a peripheral boundary wall located between the first and second major surfaces. The engager or engaging means or engagement means may comprise one or more pins, latches, clips, tabs or hooks for securing the tray or body to a portion of the trolley, e.g. a galley trolley of an aircraft.

The tray may comprise runners configured to engage with corresponding formations provided on a trolley.

The tray or body may comprise a gripper or gripping means, gripping portion or handle, e.g. so as to facilitate insertion/removal of the tray into/from a trolley. The gripper or gripping means, gripping portion or handle may comprise a recess formed in a portion of the tray or body. The gripper or gripping means, gripping portion or handle may comprise an extension of the tray or body.

In an embodiment of the invention the gripper or gripping means, gripping portion or handle may be located on a major face of the tray or body. The gripper or gripping means, gripping portion or handle may be located on the insulative side of the tray or body, wherein the insulative side of the tray or body may be configured to face away from a comestible compartment of a galley trolley, in use. The gripper or gripping means, gripping portion or handle may be located on a first major surface and/or a second major surface of the tray or body, wherein said first and second major surfaces may be opposed and form the top and base of the tray or body.

Locating the gripper or gripping means, gripping portion or handle on a first major surface (e.g. a top side) of the tray or body facilitates insertion/removal of the tray or body into/from a trolley, e.g. into/from an upper compartment of a trolley (e.g. a dry ice compartment of a conventional galley trolley), wherein the compartment of the trolley is configured for top loading. The handle may be a hemi-spherical handle or any suitable alternative which may facilitate top loading of the trolley.

Advantageously, where the tray comprises a body describing a sealed volume, the sealed volume having a PCM received therein, the gripper or gripping means, gripping portion or handle facilitates insertion/removal of the tray at varied temperatures, e.g. between -100 and 100 °C, for example between -75 and 75 °C, e.g. when the tray is configured to be cooled to a temperature below -50°C prior to insertion into a galley trolley, e.g. below -60°C, below -70°C or below -8 °C, e.g. where the tray may be configured to be cooled to a temperature of -86°C prior to insertion into a galley trolley.

The tray may comprise a communicator or communication means. Said communicator or communication means may comprise an identification or tracking tag, e.g. a RFID tag. The identification tag or tracking tag may be either a passive or active RFID tag. The RFID tag may be arranged to contain operational information or tracking/location information associated with the tray. The operation information may comprise information regarding the number of thermal cycles the PCM has experienced and/or the time elapsed since the tray was removed from a freezer/heater and/or loaded into a trolley. In embodiments, the operation information comprises information regarding the activation time, activation parameters or conditions for ensuring the PCM of a tray reaches a solid phase or liquid phase, e.g. the freezer or heater time, temperature and/or other relevant conditions.

The operation information may comprise information regarding a trolley number or a flight number or location. The tracking/location information may comprise information regarding the location of origin of a tray and/or a particular trolley to which the or a particular tray belongs or is associated.

In embodiments, the tray comprises a protective cover. The protective cover may be arranged to at least partially cover or encapsulate the tray or body. The protective cover may be an elastomeric cover, e.g. a rubber cover.

In embodiments, the tray may be configured to be cooled to a temperature below -50°C prior to insertion into a galley trolley, e.g. below -60 °C, below -70 °C or below -80 °C. The tray may be configured to be cooled to a temperature of -86 °C prior to insertion into a galley trolley.

There is also disclosed a kit of parts comprising two parts configured to combine or engage to describe a body of a tray as described above. The kit of parts may comprise a phase change material.

According to an aspect of the invention, there is provided a galley trolley for an aircraft, comprising a tray as described above.

For the avoidance of doubt, any of the features described herein apply equally to any aspect of the invention.

There is also disclosed a computer program element comprising and/or describing and/or defining a three-dimensional design for use with a simulator or simulation means or a three-dimensional additive or subtractive manufacturing means or device, e.g. a three-dimensional printer or CNC machine, the three-dimensional design comprising an embodiment of the tray described above.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

Embodiments of the invention will now be described by way of example only with reference to the accompanying drawings in which:
Figure 1 is perspective view of a tray according to an embodiment of the invention;
Figure 2 is an end perspective view of the tray of Figure 1;
Figure 3 is an exploded perspective view of the retainer or retaining means of the tray of Figures 1 and 2;
Figure 4 is an exploded bottom perspective view of the retainer or retaining means of the tray of Figures 1 to 3;
Figure 5 is a perspective view of a tray according to an embodiment of the invention;
Figure 6 is an exploded perspective view of the tray of Figure 5;
Figure 7 is an exploded perspective view of the retainer or retaining means of the tray of Figures 5 and 6;
Figure 8a is an exploded perspective view of the tray of Figures 5 to 7;
Figure 8b is a cross-sectional view of the interface between the first part and second part of Figures 5 to 8a;
Figure 9 is a perspective view of a tray according to an embodiment of the invention;
Figure 10 is an exploded perspective view of the retainer or retaining means of the tray of Figure 9;
Figure 11 is a sectional view of the tray of Figures 9 and 10;
Figure 12 is an exploded perspective view of the tray of Figure 9;
Figure 13 is a cross-sectional view of the interface between the first part and second part of Figures 9 to 12; and
Figure 14 is a graph showing the results of the Examples.

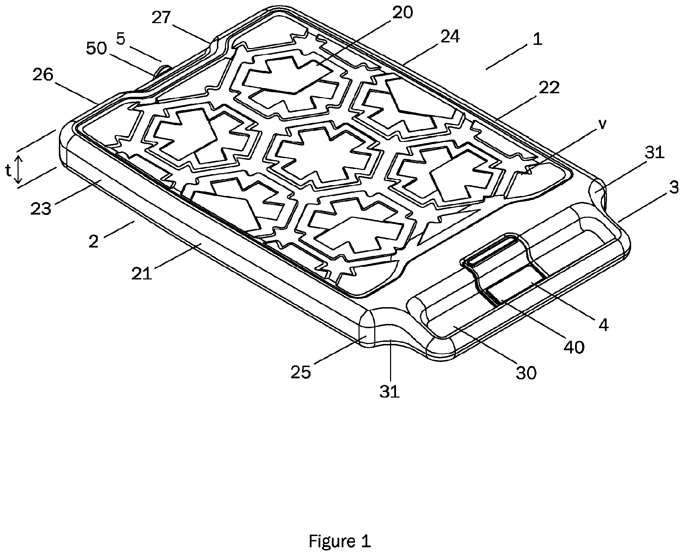

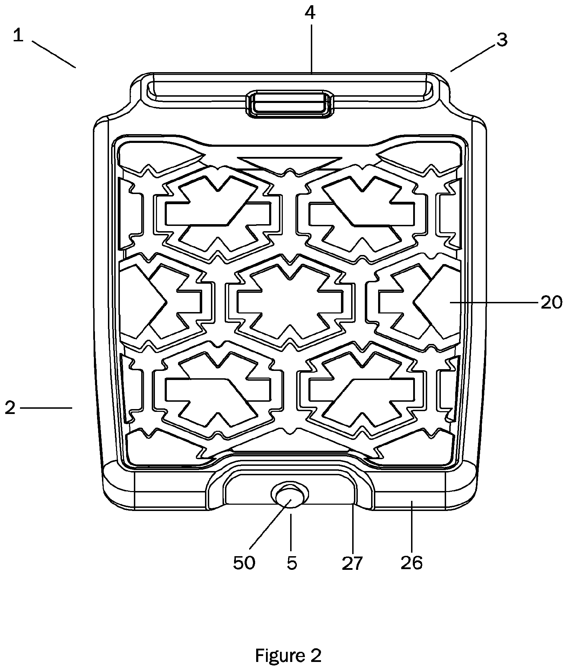

Referring now to Figures 1 and 2, there is shown a tray 1 according to an embodiment of the invention, for use in a galley trolley of an aircraft (not shown). The tray 1 has a blow moulded body 2 (hereinafter "body") describing a sealed volume V arranged to receive a phase change material (PCM). The body 2 is formed of a plastics material as a single part in this embodiment.

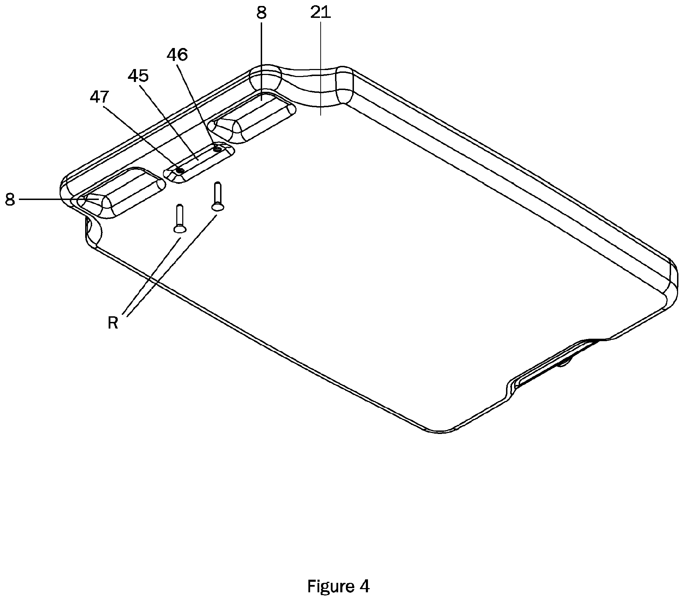

The body 2 is substantially cuboidal, having an upper surface 20, an opposed, lower surface 21, a pair of sidewalls 23, 24, front wall 25 and rear wall 26. The upper surface 20 has optional indicia formed thereon and a peripheral lip 22 extending thereabout. The lower surface 21 is substantially planar in this embodiment (shown more clearly in Figure 4).

The pair of sidewalls 23, 24, front wall 25 and rear wall 26 together extend about the body 2 through thickness 't' described between the upper and lower surfaces 20, 21.

A gripping portion 3 is described by an extension of the body 2, proximate the front wall 25. The gripping portion 3 has a recess 30 extending width-wise along a portion of the front wall 25 so as to describe a handle. A pair of shoulders 31 extend between the gripping portion 3 and the front wall 25.

A retaining means in the form of a retractable latch 4 is located within recess 40 formed into the upper surface 20, proximate the front wall 25 of the body 2. The retractable latch 4 is configured to retain the tray 1 within a trolley, in use. The recess 40 is of a greater depth than, and is located centrally of, recess 30.

A recessed portion 27 is located on the rear wall 26, through which an inlet 5 extends. The inlet 5 provides fluid communication with the volume V to allow filling thereof. The inlet 5 is sealed using a cap 50 in this embodiment.

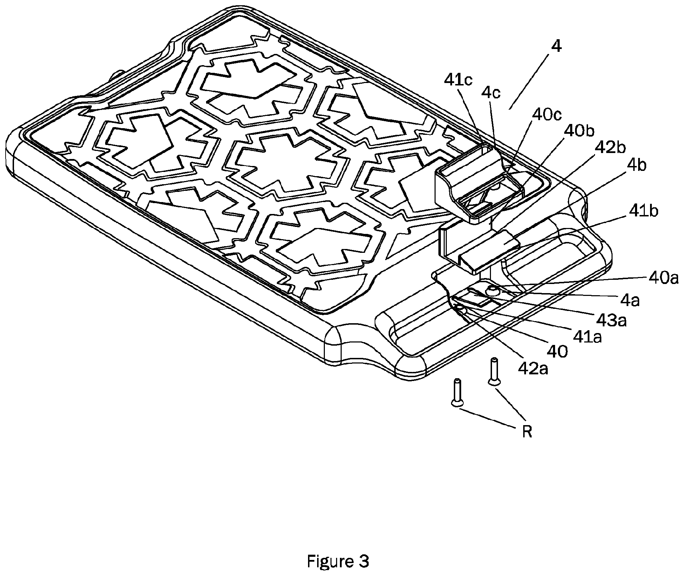

Referring now to Figures 3 and 4, there shown an exploded view of the retractable latch 4. In the present embodiment, the retractable latch 4 has a resilient biaser, in this case a spring 4a, received within the recess 40. Received above the spring 4a is a latch component 4b, which is retained within the recess 40 by cover moulding 4c.

The spring 4a is formed of sheet metal in this embodiment and has a base plate 40a having a pair of apertures 41a extending therethrough, for receipt of retaining screws R. Each of the apertures 41a extend through frustoconical protrusions 42a that extend from the base plate 40a. Located centrally of the apertures 41a is a tongue 43a. The tongue 43a is connected to the base plate 40a at one end thereof and deformed relative thereto so as to provide a biasing force to latch component 4b.

The latch component 4b is an injection-moulded plastics component in this embodiment having a latching element 40b formed integrally with actuating element 41b via a connecting member 42b. The latching element 40b and actuating element 41b describe a slot therebetween. The actuating element 41b is arranged such that when it is pressed by a user, the tongue 43a is deformed and both the latching element 40b and actuating element 41b are displaced to allow release of the tray 1 from a trolley (not shown).

The cover moulding 4c is configured to be received within the recess 40 and has a pair of apertures 40c (of which only one is shown) that are arranged, in use, to be aligned with apertures 41a of the spring component 4a. The cover moulding 4c also has a further pair of apertures 41c arranged to receive a respective one of latching element 40b and actuating element 41b.

As shown more clearly in Figure 4, a recess 45 is formed on the lower surface 21, opposite to that of recess 40. A floor portion 46 extends between recess 40 and recess 45, having apertures 47 extending therethrough. The floor portion 46 is described by a portion of the upper surface 20 and a portion of the lower surface 21 adjacent one another, so as to provide a solid area to drill apertures 47. Apertures 41a, 40c and 47 are configured to align such that retaining screws R can extend therethrough and retain the latch 4 within the tray 1, and in particular recess 40.

When assembling the latch 4, the spring component 4a is positioned within the recess 40 such that apertures 41a and 47 are aligned. The latch component 4b is inserted into the recess 40 above the spring component 4a and the cover moulding 4c is inserted above the latch component 4b such that apertures 40c are aligned with apertures 41a and 47.

The retaining screws R are inserted through the apertures 40c, 41a and 47 from the lower surface 21 of the tray 1 to retain the latch 4 within the recess 40. Each of the latching element 40b and actuating element 41b are resiliently biased by the tongue 43a, allowing for displacement under the application of force.

Also shown on the lower surface 21 are a pair of shut-off features 8, located either side of recess 41. The shut-off features 8 are formed by bringing a portion of the upper surface 20 and a portion of the lower surface 21 into contact, so as to provide a degree of reinforcement to the body 2. In the present embodiment, the shut-off features 8 are located in the region of recess 30.

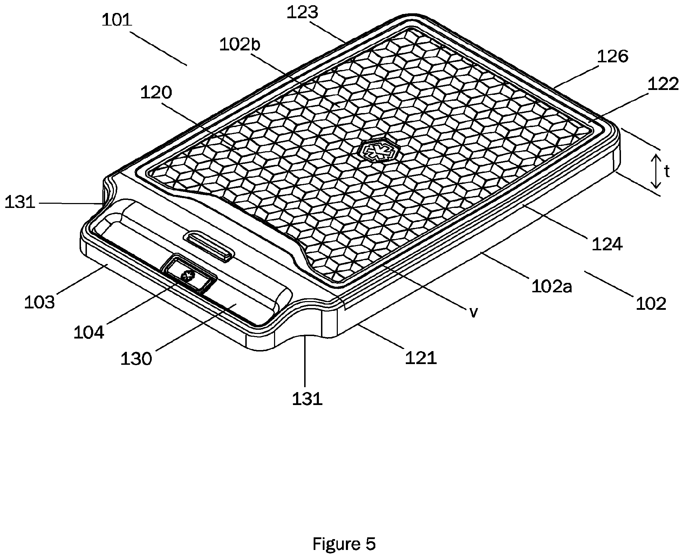

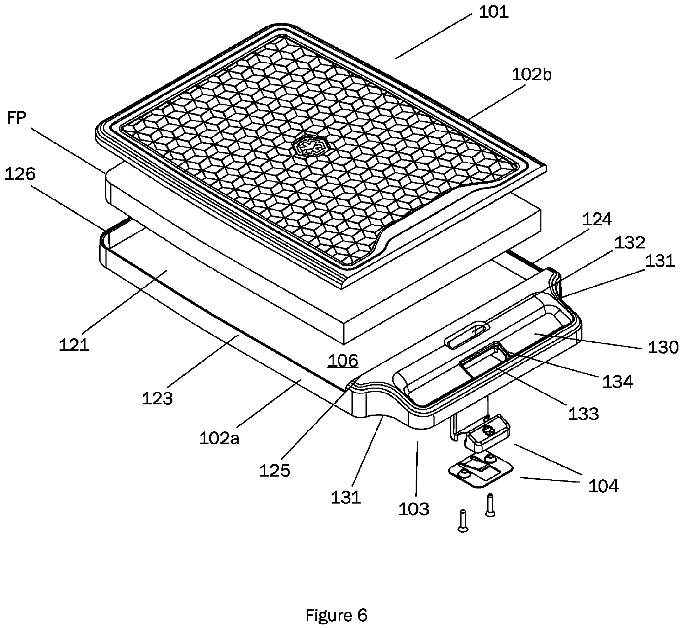

Referring now to Figures 5 and 6, there is shown a tray 101 according to another embodiment of the invention, for use in a galley trolley of an aircraft (not shown). Like features to those of Figures 1 to 4 are denoted by like references, incremented by '100'.

The tray 101 has a two-part injection moulded body 102 (hereinafter "body") describing a sealed volume V arranged to receive a phase change material PCM in the form of a cuboidal block (Figure 6). The body 102 is formed of a plastics material and includes a first part 102a and a second part 102b that together describe the sealed volume V.

In the present embodiment, the first part 102a is a tray assembly and the second part 102b is a lid arranged to combine with the first part 102a, and be sealably secured thereto, so as describe the sealed volume V.

As is the case of tray 1, the body 102 is substantially cuboidal, having an upper surface 120 described by the first part 102a. The body 102 also has an opposed, lower surface 121, a pair of sidewalls 123, 124 a front wall 125 and rear wall 126 each described by the second part 102b. The second part 102b has optional indicia formed thereon and a peripheral lip 122 extending thereabout.

The pair of sidewalls 123, 124, front wall 125 and rear wall 126 together extend about the body 102 through the thickness 't' described between the upper and lower surfaces 120, 121.

The first part 102a includes a cavity 106 for receipt of the PCM. The cavity 106 is described by the lower surface 121, sidewalls 123, 124, front wall 125 and rear wall 126.

A gripping portion 103 is formed integrally with the first part 102a, proximate the front wall 125. The gripping portion 103 has a recess 130 extending widthwise along a portion of the front wall 125 so as to describe a handle. A pair of shoulders 131 extend between the gripping portion 103 and the front wall 125.

The gripping portion 103 also has a pair of apertures 132, 133 extending therethrough for receiving a retaining means in the form of a retractable latch 104. The pair of apertures 132, 133 are separated by a wall 134 having a pair of recesses in this embodiment (not shown) for receipt of retaining screws R. The wall 134 provides a mounting point for the latch 104.

A portion of the latch 104 protrudes from the upper surface 120 and is configured to retain the tray 101 within a trolley (not shown), in use.

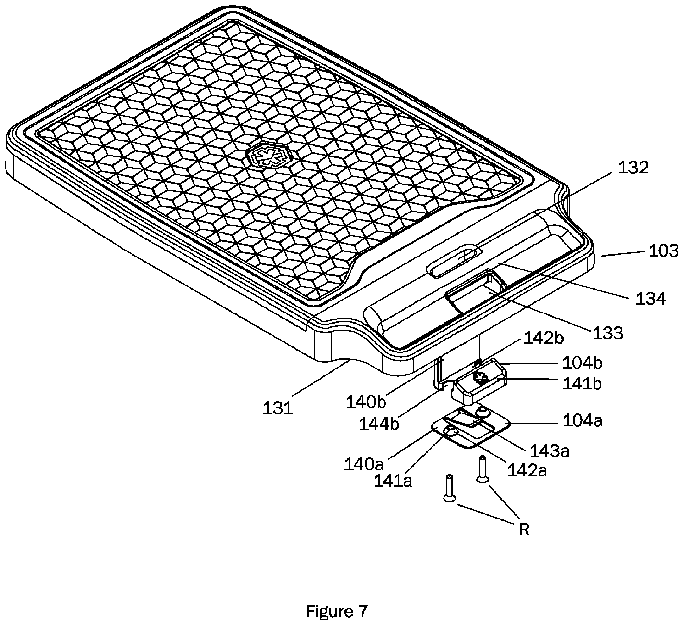

As shown in greater detail in Figures 6 and 7, the latch 104 has a spring component 104a arranged to be affixed to the lower surface 121 of the body 102 via retaining screws R. Received above the spring 104a is a latch component 104b, which itself extends through the apertures 132, 133.

The spring 104a is formed of sheet metal in this embodiment and has a base plate 140a having a pair of apertures 141a extending therethrough, for receipt of retaining screws R. Each of the apertures 141a extend through frustoconical protrusions 142a that extend from the base plate 140a. Located centrally of the apertures 141a is a tongue 143a. The tongue 143a is connected to the base plate 140a at one end thereof and deformed relative thereto so as to provide a biasing force to latch component 104b.

The latch component 104b is a moulded plastics component in this embodiment having a latching element 140b formed integrally with an actuating element 141b via a connecting member 142b. The latching element 140b and actuating element 141b describe a slot therebetween. The actuating element 141b is arranged such that when pressed by a user, the tongue 143a is deformed and both the latching element 140b and actuating element 141b are displaced. The connecting member 142b has a pair of recesses 144b for receipt of a respective retaining screw R during assembly.

As shown in Figure 7, in order to assemble the latch 104 the latching element 140b is received within a first of the pair of apertures 132 and the actuating element 141b is received within the other of the apertures 133. The connecting member 142b abuts the wall 134 and the spring component 104a is brought adjacent the lower surface 121 such that the connecting member 142b lies between the wall 134 and a portion of the spring component 104b. The apertures 141a are aligned with the recess of wall 134 and recesses 144b and the retaining screws R are passed therethrough so as to retain the latch component 104b on the tray 101 via the spring component 104a.

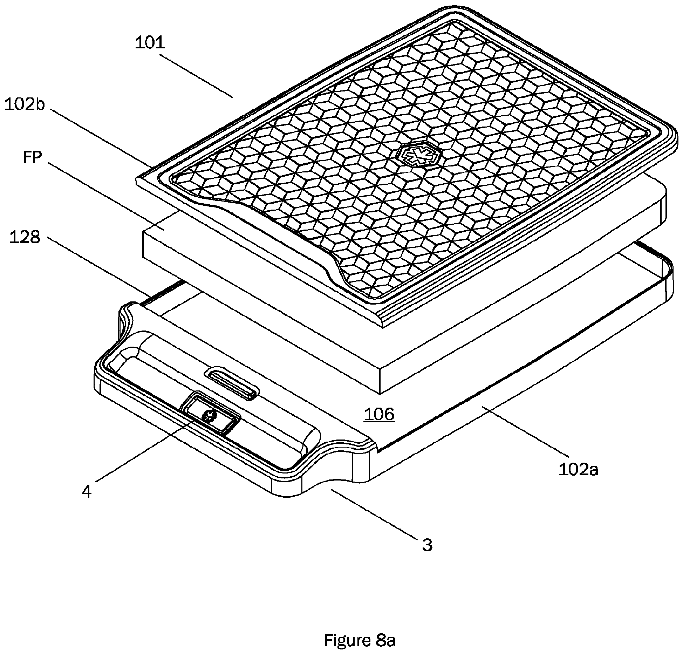

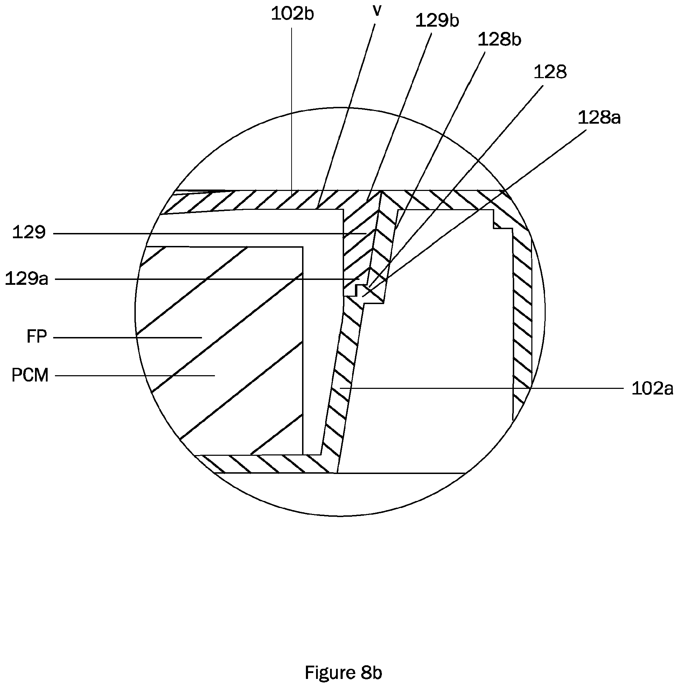

Referring now to Figures 8a and 8b, there is shown the assembly of the first part 102a and second part 102b so as to describe the sealed volume V. As shown in more detail in Figure 8b, each of the first part 102a and second part 102b have a respective ledge 128, 129.

Ledge 128 extends about the periphery of the cavity 106 and ledge 129 extends about the periphery of the second part 102b. Each respective ledge 128, 129 includes a step portion 128a, 129a. Each respective ledge 128, 129 also includes a wall 128b, 129b extending therefrom and between the gripping portion 103 and cavity 106. The walls 128b, 129b each have a corresponding taper to provide a lead-in when mounting the second part 102b to the first part 102a. Ledges 128 and 129 are configured to provide an interface between the first part 102a and second part 102b.

During assembly of the tray 101 in the present embodiment, a foam pad FP is received within the cavity 106. The first part 102a is brought adjacent the second part 102b such that ledges 128 and 129 are in contact. In the present embodiment, the interface between the ledges 128, 129 is heated so as to fuse the first part 102a to the second part 102b, creating the sealed volume V. Before the first part 102a and second part 102b are sealed together, a fluid PCM material is poured onto the foam pad FP. The foam pad FP acts as a matrix for the PCM and reduces the effective volume of the internal volume of the tray.

In embodiments of the invention we prefer a polyurethane or a phenolic foam material for the foam pad FP.

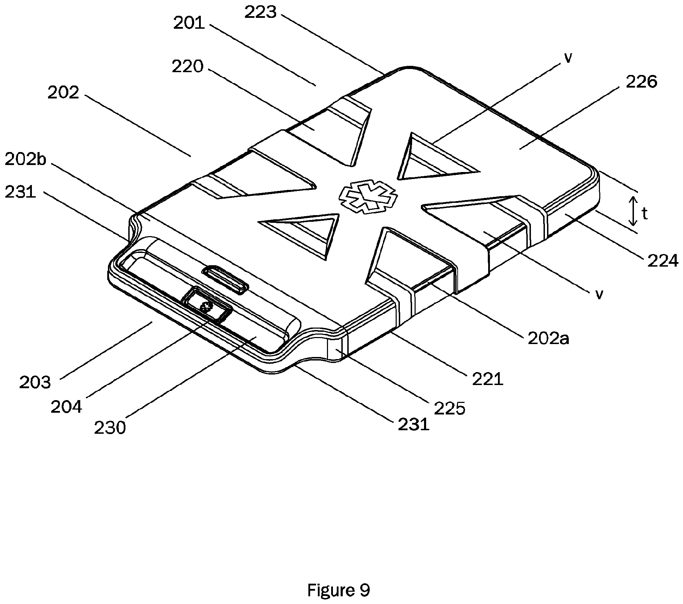

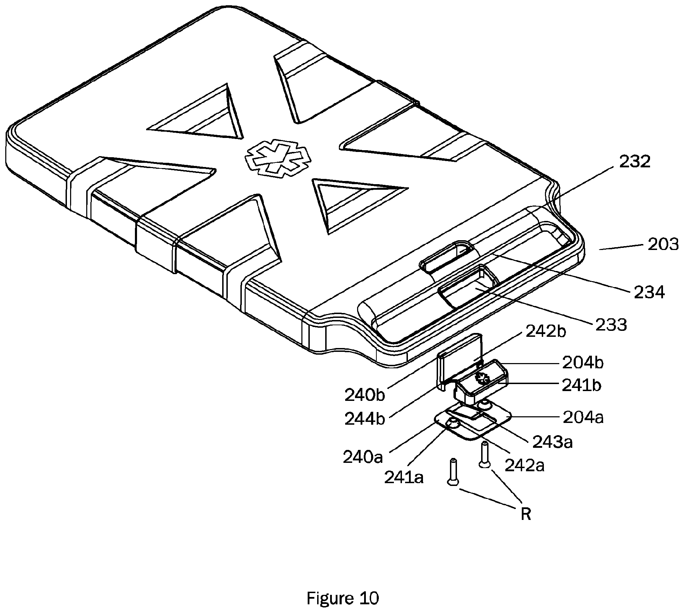

Referring now to Figures 9 and 10, there is shown a tray 201 according to an embodiment of the invention, for use in a galley trolley of an aircraft (not shown). Where appropriate, like features to those of Figures 1 to 4 are denoted by like references, incremented by '200'.

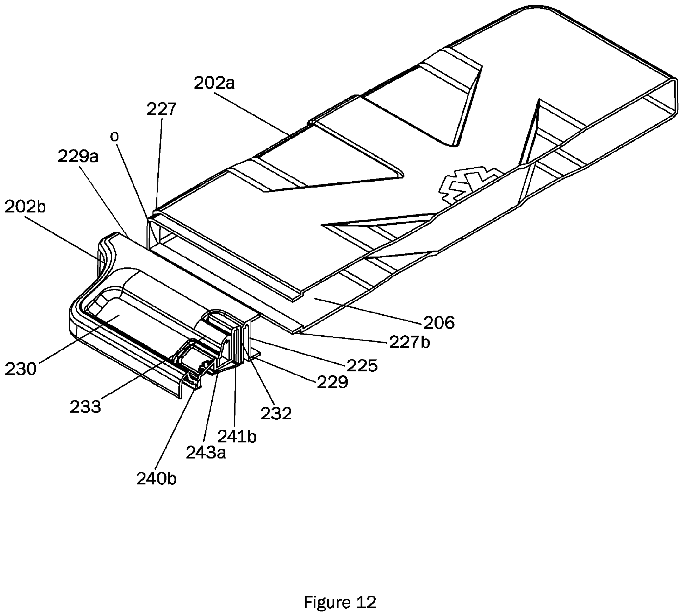

The tray 201 has a two-part body 202 formed from a combination of blow-moulding and injection moulding and describing a sealed volume V arranged to receive a phase change material PCM in the form of a cuboidal block (Figure 12). The body 202 is formed of a plastics material and includes a first part 202a and a second part 202b that together describe the sealed volume V.

In the present embodiment, the first part 202a is a blow moulded sleeve assembly and the second part 202b is an injection moulded cap arranged to be combine with the first part 202a, and be sealably secured thereto, so as describe the sealed volume V.

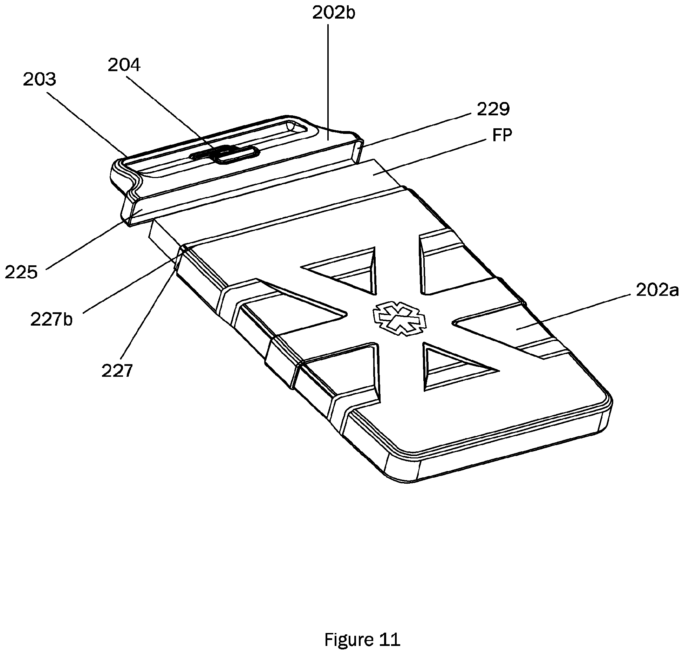

As is the case of tray 1, the body 202 is substantially cuboidal. The first part 202a has an upper surface 220, an opposed, lower surface 221, a pair of sidewalls 223, 224 and a rear wall 226 together describing a sleeve forming a cavity 206 having an opening O (Figure 11). The cavity 206 is configured to receive a foam pad FB and the PCM (Figure 12).

The body 202 also has a front wall 225 described by the second part 202b. Each of the front wall 225 and rear wall 226 are widthwise extending. The first part 202a has indicia formed on the upper surface 220 thereof.

The pair of sidewalls 223, 224, front wall 225 and rear wall 226 together extend about the body 202 through the thickness 't' described between the upper and lower surfaces 220, 221.

A gripping portion 203 is formed integrally with the second part 202b, proximate the front wall 225. The gripping portion 203 has a recess 230 extending widthwise along a portion of the front wall 225 so as to describe a handle. A pair of shoulders 231 extend between the gripping portion 203 and the front wall 225.

The gripping portion 203 also has a pair of apertures 232, 233 extending therethrough for receiving a retaining means in the form of a retractable latch 204. The pair of apertures 232, 233 are separated by a wall 234 having one or more recesses in this embodiment (Figure 11) for receipt of retaining screws R. The wall 234 provides a mounting point for the latch 204. The latch 204 protrudes from the second part 202b and is configured to retain the tray 201 within a trolley (not shown), in use.

As shown in greater detail in Figures 10 and 11, the latch 204 has a spring component 204a arranged to be affixed to the lower surface 221 of the body 202, in particular to the second part 202b, via retaining screws R. Received above the spring component 204a is a latch component 204b, which itself extends through the apertures 232, 233.

The spring component 204a is formed of sheet metal in this embodiment and has a base plate 240a having a pair of apertures 241a extending therethrough, for receipt of retaining screws R. Each of the apertures 241a extend through frustoconical protrusions 242a that extend from the base plate 240a. Located centrally of the apertures 241a is a tongue 243a. The tongue 243a is connected to the base plate 240a at one end thereof and deformed relative thereto so as to provide a biasing force to latch component 204b.

The latch component 204b is a moulded plastics component in this embodiment having a latching element 240b connected to an actuating element 241b via a connecting member 242b. The latching element 240b and actuating element 241b describe a slot therebetween. The actuating element 241b is arranged such that when it is pressed by a user, the tongue 243a is deformed and both the latching element 240b and actuating element 241b are displaced. The connecting member 242b has a pair of recesses 244b for receipt of a respective retaining screw R during assembly.

In order to assemble the latch 204 the latching element 240b is received within a first of the pair of apertures 232 and the actuating element 241b is received within the other of the apertures 233. The connecting member 242b abuts the wall 234 and the spring component 204a is brought adjacent the lower surface 221 of the second part 202b such that the connecting member 242b lies between the wall 234 and a portion of the spring component 204a. The apertures 241a are aligned with the recess of wall 234 and recesses 244b and the retaining screws R are passed therethrough so as to retain the latch component 204b on the tray 201 via the spring component 204a.

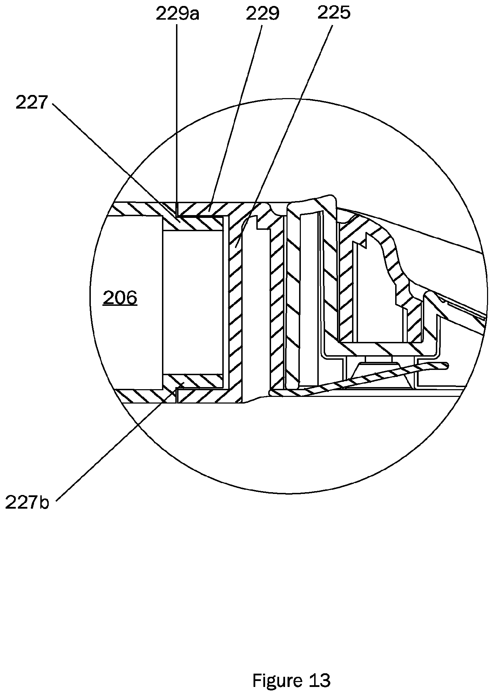

Referring now to Figures 11 to 13, there is shown the assembly of the first part 202a and second part 202b so as to describe the sealed volume V. As is shown, the first part 202a has a ledge 227 extending about the opening O and a wall 227b inboard of, and extending therefrom. Inboard in this sense will be understood to be towards the central of the opening O. The second part 202b also has a peripheral wall 229 extending from the front wall 225 towards a free end 229a.

During assembly of the tray 201, the foam pad FP is received within the cavity 206. The first part 202a is brought adjacent the second part 202b such that the wall 227b lies inboard of, and adjacent, the peripheral wall 229 and the free end 229a is brought into contact with ledge 227. Before the first part 202a and second part 202b are secured together a fluid PCM material is poured into the internal volume of the tray.

In the present embodiment, the interface between the walls 227b and 229 is heated so as to fuse the first part 202a to the second part 202b, creating the sealed volume V.

In order to assess the performance of PCM materials against the currently in-use dry ice (CO₂ (s)) coolant the following experiments were conducted.

### Comparative Example 1

2.4kg of dry ice was loaded into a tray with dimensions 315×270x27mm and located at the top of a galley trolley which was loaded with food.

The core temperature of the food was measured over time.

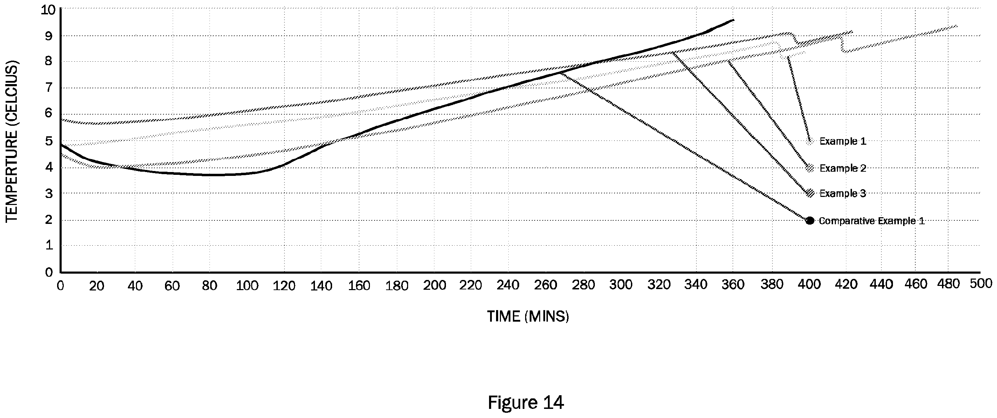

The results are shown in Figure 14.

### Example 1

Into an identical tray to that used in Comparative Example 1, a block of foam (282x224x25mm) and 2 litres of a phase change material with a phase change temperature of -50°C was loaded. The tray was loaded into an identical galley trolley stocked with the same foodstuffs as per Comparative Example 1.

The core temperature of the food was measured over time.

The results are shown in Figure 14.

### Example 2

Example 1 was repeated but the 2 litres of phase change material was replaced with 1.4 litres of the PCM and 0.9 litres of water.

The results are shown in Figure 14.

### Example 3

Example 1 was repeated but the phase change material was replaced with 2 litres of a phase change material having a phase change temperature of -7°C.

The results are shown in Figure 14.

The experiments demonstrate that PCM materials are able to maintain the core temperature of the food below 10°C over extended time periods.

Indeed, all of the Examples of the invention outperform dry ice over a 5 hour window and Example 2 outperforms dry ice after two hours, whilst Example 1 out performs dry ice after four hours. The result of Example 2 is surprising because it has less PCM than Example 1 and so would be expected to perform less well.

Clearly, all of the Examples of the invention are able to maintain a low temperature of food and, critically, are able to ensure low temperatures over a long time period, which becomes important in case of delays.

Notwithstanding, the improved performance, the use of PCM materials provides extra flexibility to users, reduces supply chain issues and reduces handling problems associated with dry ice.

It will be appreciated by those skilled in the art that several variations to the aforementioned embodiments are envisaged without departing from the scope of the invention. For example, any of the features described in relation to tray 1 may be applied or interchanged with any of the features described in relation to tray 101 or tray 201, where such features are compatible. Further, whilst the interface between the ledges 128, 129 of tray 101 and between walls 227b and 229 of tray 201 is heated so as to fuse the respective first and second parts together, creating the sealed volume V, this need not be the case.

Instead, any other suitable means for connecting the first and second parts together so as to create a fluid tight seal may be utilised, *e.g.* a snap fit arrangement, the incorporation of one or more gaskets and/or the use of a sealing agent between the first and second parts. It will also be appreciated by those skilled in the art that any number of combinations of the aforementioned features and/or those shown in the appended drawings provide clear advantages over the prior art and are therefore within the scope of the invention described herein.

Also, the walls of the container may have different thicknesses to each other. For example, an intended bottom most surface (e.g. lowermost surface 21) may be thinner than the intended uppermost surface (e.g. uppermost surface 20) and the side walls (e.g. walls 23-26). In this way the lowermost surface will be more thermally conductive and heat will flow into that wall in a greater flux than it will flow into the other walls. Of course, in addition or instead, the lowermost wall may be made from, or comprise, a material which has a higher thermal conductivity than the other walls.

Each tray may comprise thermal conductivity promoters. For example, the intended comestible-facing side or face of the tray may comprise thermal conductivity promoters. These may be in the form of protuberances, fins etc which extend from a surface of the tray into the sealed volume. In an embodiment these may be formed on the internal surface of the tray, for example by joining or integrally forming.

The provision of a pattern or other indicator on the intended uppermost surface may provide a convenient visual indicator to allow an operative to install the tray in the correct orientation. The tray may be shaped

Further, it is also possible to provide the tray with a liner material to line all or some of the internal walls thereof. The tray can be made from metal materials, for example aluminium or aluminium alloys. A metal liner material may aid or encourage heat conduction in a desired direction. The liner may be made from polymeric or plastics materials. A polymeric or plastics liner material may inhibit heat conduction in a desired directions. The polymeric material or plastics liner material may be doped with heat conductive materials. A doped polymeric/plastics liner may aid or encourage heat conduction in a desired direction.

The tray may also be provided with a hydrophobic coating.

## Claims

1. A tray (1) for releasably engaging a trolley, the tray (1) comprising a body (2) having a first major surface and a second major surface, the body (2) describing a sealed volume (V), the sealed volume (V) having a phase change material (PCM) received therein, the tray (1) comprising an engagement means (4) for releasably engaging a trolley and **characterised in that** the thermal conductivity of the first major surface is less than the thermal conductivity of the second major surface.

2. A tray (1) according to claim 1, wherein the first major surface is thicker than the second major surface and/or wherein the first major surface is fabricated from a first material and the second major surface is fabricated from a second material and wherein the first material has a lower thermal conductivity than the second material.

3. A tray (1) according to claim 1 or 2 comprising thermal conductivity promoters located on or towards the second major surface.

4. A tray (1) according to any preceding claim, wherein the phase change material (PCM) has a phase change temperature of from +75 to -75 degrees Celsius or wherein the phase change material (PCM) comprises a eutectic solution.

5. A tray (1) according to any preceding claim, wherein sealed volume (V) comprises an aerogel or insulative foam and wherein the insulative foam may be an open celled foam and/or wherein the insulative foam may comprise a phenolic foam, polystyrene or polyurethane.

6. A tray (1) according to claim 5, wherein the phase change material (PCM) is at least partially located within the pores of the insulative foam.

7. A tray (1) according to claim 5 or 6, wherein the insulative foam comprises a thermally conductive member and wherein the thermally conductive member may comprise one or more of metal, graphite, carbon nanotubes and/or graphene, for example wherein the insulative foam comprises between 1 and 2% carbon nanotubes and/or graphene by weight.

8. A tray (1) according to any preceding claim, wherein the body (2) comprises a polymeric material and/or wherein the body (2) is moulded and/or wherein the body (2) comprises one or more of metal, graphite, carbon nanotubes and/or graphene, for example wherein the body (2) comprises between 1 and 2% carbon nanotubes and/or graphene by weight.

9. A tray (1) according to any preceding Claim, wherein the tray (1) or body (2) comprises a hydrophobic coating.

10. A tray (1) according to any preceding claim, wherein the releasable engaging means (4) allow the tray (1) to be secured to and removed from a trolley in which it is locatable, the releasable engaging means (4) may comprise one or more tabs or clips for engaging a portion of a trolley and wherein the releasable engaging means (4) may comprise one or more retractable tabs for engaging a portion of a trolley.

11. A tray (1) according to any preceding claim, comprising communication means and wherein the communication means may comprise a RFID tag, arranged to contain operational information associated with the tray (1).

12. A tray (1) according to any preceding claim, comprising indicia to identify the first major surface and/or the second major surface.

13. A tray (1) according to any preceding claim, configured to engage a galley trolley of an aircraft and wherein the tray (1) is shaped in a complementary fashion to a portion of a trolley such that the tray (1) is installable in a trolley only in a desired orientation and/or wherein the engagement means (4) is configured to prevent movement of the tray (1) relative to a trolley, in use.

14. A galley trolley for an aircraft, comprising a tray (1) according to any preceding claim and wherein the trolley comprises a food storage compartment and a tray storage compartment in which the tray (1) is located or locatable.

15. A galley trolley according to claim 14, wherein, in use, the second major surface faces the food storage compartment.

## Patentansprüche

1. Schale (1) zum lösbaren Eingreifen mit einem Wagen, die Schale (1) umfassend einen Körper (2), der eine erste Hauptoberfläche und eine zweite Hauptoberfläche aufweist, wobei der Körper (2) ein abgedichtetes Volumen (V) beschreibt, wobei das abgedichtete Volumen (V) ein darin aufgenommenes Phasenänderungsmaterial (PCM) aufweist, die Schale (1) umfassend eine Eingriffseinrichtung (4) zum lösbaren Eingreifen eines Wagens, **dadurch gekennzeichnet, dass** die Wärmeleitfähigkeit der ersten Hauptoberfläche geringer ist als die Wärmeleitfähigkeit der zweiten Hauptoberfläche.

2. Schale (1) nach Anspruch 1, wobei die erste Hauptoberfläche dicker ist als die zweite Hauptoberfläche und/oder wobei die erste Hauptoberfläche aus einem ersten Material gefertigt ist und die zweite Hauptoberfläche aus einem zweiten Material gefertigt ist und wobei das erste Material eine geringere Wärmeleitfähigkeit als das zweite Material aufweist.

3. Schale (1) nach Anspruch 1 oder 2, umfassend Wärmeleitfähigkeitsförderern, die sich auf oder in Richtung der zweiten Hauptoberfläche befinden.

4. Schale (1) nach einem der vorhergehenden Ansprüche, wobei das Phasenwechselmaterial (PCM) eine Phasenwechseltemperatur von +75 bis -75 Grad Celsius aufweist oder wobei das Phasenwechselmaterial (PCM) eine eutektische Lösung umfasst.

5. Schale (1) nach einem der vorhergehenden Ansprüche, wobei das abgedichtete Volumen (V) ein Aerogel oder einen isolierenden Schaumstoff umfasst und wobei der isolierende Schaumstoff ein offenzelliger Schaumstoff sein kann und/oder wobei der isolierende Schaumstoff einen Phenolschaum, Polystyrol oder Polyurethan umfassen kann.

6. Schale (1) nach Anspruch 5, wobei sich das Phasenwechselmaterial (PCM) zumindest teilweise in den Poren des isolierenden Schaumstoffs befindet.

7. Schale (1) nach Anspruch 5 oder 6, wobei der isolierende Schaumstoff ein wärmeleitendes Element umfasst und wobei das wärmeleitende Element eines oder mehrere von Metall, Graphit, Kohlenstoffnanoröhren und/oder Graphen umfassen kann, beispielsweise wobei der isolierende Schaumstoff zwischen 1 und 2 Gewichtsprozent Kohlenstoffnanoröhren und/oder Graphen umfasst.

8. Schale (1) nach einem der vorhergehenden Ansprüche, wobei der Körper (2) ein polymeres Material umfasst und/oder wobei der Körper (2) geformt ist und/oder wobei der Körper (2) eines oder mehrere von Metall, Graphit, Kohlenstoffnanoröhren und/oder Graphen umfasst, beispielsweise wobei der Körper (2) zwischen 1 und 2 Gewichts-% Kohlenstoffnanoröhren und/oder Graphen umfasst.

9. Schale (1) nach einem der vorhergehenden Ansprüche, wobei die Schale (1) oder der Körper (2) eine hydrophobe Beschichtung umfasst.

10. Schale (1) nach einem der vorhergehenden Ansprüche, wobei die lösbaren Eingriffseinrichtungen (4) es ermöglichen, die Schale (1) an einem Wagen, in dem es angeordnet werden kann, zu befestigen und davon zu entfernen, wobei die lösbaren Eingriffseinrichtungen (4) eine oder mehrere Laschen oder Clips zum Eingreifen eines Abschnitts eines Wagens umfassen können und wobei die lösbaren Eingriffseinrichtungen (4) eine oder mehrere einziehbare Laschen zum Eingreifen eines Abschnitts eines Wagens umfassen können.

11. Schale (1) nach einem der vorhergehenden Ansprüche, umfassend Kommunikationseinrichtungen, und wobei die Kommunikationseinrichtungen ein RFID-Etikett umfassen können, das angeordnet ist, um Betriebsinformationen zu enthalten, die mit der Schale (1) assoziiert sind.

12. Schale (1) nach einem der vorhergehenden Ansprüche, umfassend Kennzeichnungen zum Identifizieren der ersten Hauptoberfläche und/oder der zweiten Hauptoberfläche.

13. Schale (1) nach einem der vorhergehenden Ansprüche, die konfiguriert ist, um einen Bordküchenwagen eines Flugzeugs einzugreifen, und wobei die Schale (1) komplementär zu einem Abschnitt eines Wagens geformt ist, sodass die Schale (1) nur in einer gewünschten Ausrichtung in einem Wagen installiert werden kann und/oder wobei das Eingriffseinrichtungen (4) konfiguriert sind, um im Gebrauch eine Bewegung der Schale (1) in Bezug auf einen Wagen zu verhindern.

14. Bordküchenwagen für ein Flugzeug, umfassend ein Schale (1) nach einem der vorhergehenden Ansprüche, wobei der Wagen ein Lebensmittelaufbewahrungsfach und ein Schalenaufbewahrungsfach umfasst, in dem die Schale (1) angeordnet oder anordnungsfähig ist.

15. Bordküchenwagen nach Anspruch 14, wobei die zweite Hauptoberfläche im Gebrauch dem Lebensmittelaufbewahrungsfach zugewandt ist.

## Revendications

1. Plateau (1) destiné à venir en prise de manière amovible avec un chariot, le plateau (1) comprenant un corps (2) comportant une première surface principale et une seconde surface principale, le corps (2) décrivant un volume scellé (V), le volume scellé (V) comportant un matériau à changement de phase (PCM) reçu à l'intérieur de celui-ci, le plateau (1) comprenant des moyens de prise (4) destinés à venir en prise de manière amovible avec un chariot et **caractérisé en ce que** la conductivité thermique de la première surface principale est inférieure à la conductivité thermique de la seconde surface principale.

2. Plateau (1) selon la revendication 1, dans lequel la première surface principale est plus épaisse que la seconde surface principale et/ou dans lequel la première surface principale est fabriquée à partir d'un premier matériau et la seconde surface principale est fabriquée à partir d'un second matériau et dans lequel le premier matériau comporte une conductivité thermique inférieure à celle du second matériau.

3. Plateau (1) selon la revendication 1 ou 2 comprenant des promoteurs de conductivité thermique situés sur ou vers la seconde surface principale.

4. Plateau (1) selon l'une quelconque des revendications précédentes, dans lequel le matériau à changement de phase (PCM) comporte une température de changement de phase de +75 à -75 degrés Celsius ou dans lequel le matériau à changement de phase (PCM) comprend une solution eutectique.

5. Plateau (1) selon l'une quelconque des revendications précédentes, dans lequel le volume scellé (V) comprend un aérogel ou une mousse isolante et dans lequel la mousse isolante peut être une mousse à cellules ouvertes et/ou dans lequel la mousse isolante peut comprendre une mousse phénolique, du polystyrène ou du polyuréthane.

6. Plateau (1) selon la revendication 5, dans lequel le matériau à changement de phase (PCM) est au moins partiellement situé à l'intérieur des pores de la mousse isolante.

7. Plateau (1) selon la revendication 5 ou 6, dans lequel la mousse isolante comprend un élément thermiquement conducteur et dans lequel l'élément thermiquement conducteur peut comprendre un ou plusieurs éléments parmi le métal, le graphite, les nanotubes de carbone et/ou le graphène, par exemple dans lequel la mousse isolante comprend entre 1 et 2 % de nanotubes de carbone et/ou de graphène en poids.

8. Plateau (1) selon l'une quelconque des revendications précédentes, dans lequel le corps (2) comprend un matériau polymère et/ou dans lequel le corps (2) est moulé et/ou dans lequel le corps (2) comprend un ou plusieurs éléments parmi le métal, le graphite, les nanotubes de carbone et/ou le graphène, par exemple dans lequel le corps (2) comprend entre 1 et 2 % de nanotubes de carbone et/ou de graphène en poids.

9. Plateau (1) selon l'une quelconque des revendications précédentes, dans lequel le plateau (1) ou le corps (2) comprend un revêtement hydrophobe.

10. Plateau (1) selon l'une quelconque des revendications précédentes, dans lequel les moyens de mise en prise amovible (4) permettent au plateau (1) d'être fixés à et retirés d'un chariot dans lequel il peut se situer, les moyens de mise en prise amovible (4) peuvent comprendre une ou plusieurs languettes ou clips destinés à venir en prise avec une partie d'un chariot et dans lequel les moyens de mise en prise amovible (4) peuvent comprendre une ou plusieurs languettes rétractables destinés à venir en prise avec une partie d'un chariot.

11. Plateau (1) selon l'une quelconque des revendications précédentes, comprenant des moyens de communication et dans lequel les moyens de communication peuvent comprendre une étiquette RFID, conçue pour contenir des informations opérationnelles associées au plateau (1).

12. Plateau (1) selon l'une quelconque des revendications précédentes, comprenant des indices permettant d'identifier la première surface principale et/ou la seconde surface principale.

13. Plateau (1) selon l'une quelconque des revendications précédentes, configuré pour venir en prise avec un chariot d'office d'un aéronef et dans lequel le plateau (1) est profilé de manière complémentaire à une partie d'un chariot de telle sorte que le plateau (1) puisse être installé dans un chariot uniquement dans une orientation souhaitée et/ou dans lequel les moyens de prise (4) sont configurés pour empêcher le mouvement du plateau (1) par rapport à un chariot, lors de l'utilisation.

14. Chariot d'office pour un aéronef, comprenant un plateau (1) selon l'une quelconque des revendications précédentes et dans lequel le chariot comprend un compartiment de stockage de nourriture et un compartiment de stockage de plateau dans lequel le plateau (1) se trouve ou peut se situer.

15. Chariot d'office selon la revendication 14, dans lequel, lors de l'utilisation, la seconde surface principale fait face au compartiment de stockage des aliments.
